(19) Europäisches Patentamt

European Patent Office

Office européen des brevets

(11) **EP 0 905 972 A2**

(12) **EUROPEAN PATENT APPLICATION**

(43) Date of publication:
31.03.1999 Bulletin 1999/13

(51) Int. Cl.⁶: **H04N 3/185**

(21) Application number: **98117382.6**

(22) Date of filing: **14.09.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **29.09.1997 JP 264027/97**

(71) Applicant:
**Murata Manufacturing Co., Ltd.
Nagaokakyo-shi Kyoto-fu 617-8555 (JP)**

(72) Inventors:
• **Imamura, Nobuaki
Nagaokakyo-shi, Kyoto-fu, 617-8555 (JP)**
• **Toda, Yasuhiko
Nagaokakyo-shi, Kyoto-fu, 617-8555 (JP)**

• **Takiguchi, Hisashi
Nagaokakyo-shi, Kyoto-fu, 617-8555 (JP)**
• **Omura, Masaru
Nagaokakyo-shi, Kyoto-fu, 617-8555 (JP)**
• **Nagai, Tadao
Nagaokakyo-shi, Kyoto-fu, 617-8555 (JP)**
• **Tanaka, Akinobu
Nagaokakyo-shi, Kyoto-fu, 617-8555 (JP)**

(74) Representative:
**Schoppe, Fritz, Dipl.-Ing.
Schoppe & Zimmermann
Patentanwälte
Postfach 71 08 67
81458 München (DE)**

(54) **Flyback transformer**

(57) A flyback transformer (1) is of reduced size, allowing an entire power circuit used therewith to be of reduced size. The flyback transformer (1) is applied to a power circuit including a circuit for performing negative feedback control of a circuit which disconnects electric current flowing through a primary winding (2) in synchronization with a horizontal driving signal in accordance with an output voltage, and the turn ratio of a secondary winding (7) to the primary winding (2) is set to 80 or more. This makes it possible to suppress the temperature increase $\Delta T$ of a core to 35°C or less even if the core diameter is 8.5 mm or less.

FIG.1

EP 0 905 972 A2

**Description**

**BACKGROUND OF THE INVENTION**

1. Field of the Invention

The present invention relates to a flyback transformer which generates a high voltage for a color CRT display.

2. Description of the Related Art

A flyback transformer is used as a high-voltage generation circuit for generating an anode voltage or the like for a color CRT display for use in television receivers and computer monitors.

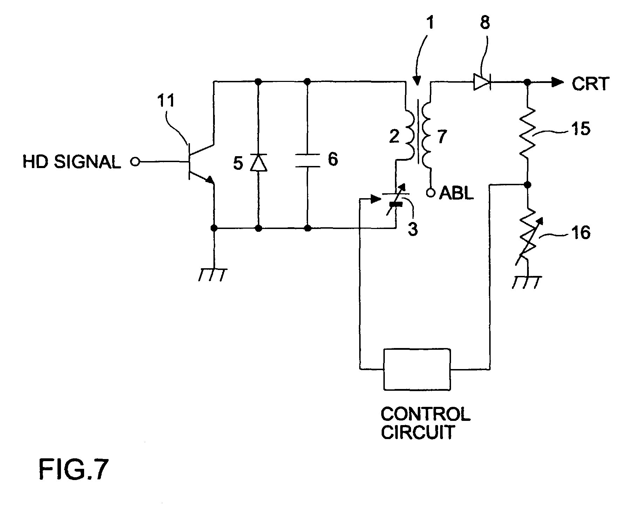

An example of a conventional high-voltage generation circuit is shown in Fig. 7. A driving power source 3 is connected between one end of a primary winding 2 and a ground. A transistor 11 as a switching element is connected in series to the other end of the primary winding 2, with each of a damper diode 5 and a resonance capacitor 6 being connected in parallel to this switching element. The high-voltage end of a secondary winding 7 of a flyback transformer 1 is connected to the anode of a CRT through a high-voltage rectifier diode 8. A control circuit inputs a voltage divided by resistors 15 and 16 and compares it with a reference voltage, and controls the voltage of the driving power source 3 so that the high output voltage is stabilized.

However, in a method for controlling the voltage of this driving power source, since a control signal is smoothed by a large-capacity capacitor in order to generate a driving power voltage within a control circuit, there is a drawback in that response is slow. For this reason, unless some measures are taken, there is a problem in that when an image having sharp luminance variations is displayed, the image is curved.

Therefore, conventionally, the following are performed: the reactive energy of a flyback transformer is increased, a resonance frequency is tuned to ninth-order, thirteenth-order, or other harmonic in order to bring the waveform of the flyback pulse close to that of a rectangular wave, so that the regulation characteristics of the flyback transformer itself are improved.

However, if the reactive energy of a flyback transformer is increased in the manner described above, the amount of heat generated is increased by an amount corresponding to the above increase. For this reason, in order to increase the heat-dissipation effect of the flyback transformer to suppress an increase in temperature, a large core is used, resulting in a problem that the overall flyback transformer is larger.

Meanwhile, in order to stabilize a high output voltage, a flyback transformer in which improvements are made on the power circuit is disclosed in Japanese Unexamined Patent Publication Nos. 2-222374 and 8-256476. The former discloses that a driving voltage which is supplied to the primary winding of the flyback transformer is PWM-controlled in synchronization with a horizontal driving signal in accordance with an output voltage.

The latter discloses that a high output voltage is stabilized by directly PWM-controlling the ON period of a switching element which controls the ON/OFF of the primary-winding current in synchronization with a horizontal driving signal in accordance with an output voltage. These power circuits have high-speed response because the primary side is controlled in synchronization with a horizontal driving signal without using a smoothing circuit, rather than controlling the driving voltage in a DC manner as in the conventional power circuit shown in Fig. 7.

**SUMMARY OF THE INVENTION**

An object of the present invention is to reduce the size of a flyback transformer which is connected to a power circuit comprising a circuit for performing negative feedback control of a circuit which disconnects electric current flowing through a primary winding in synchronization with a horizontal driving signal in accordance with an output voltage.

To achieve the above object, according to the present invention, there is provided a flyback transformer for a color CRT display, which is connected to a power circuit comprising: a circuit which disconnects electric current flowing through a primary winding; and a circuit which performs negative feedback control of the circuit in synchronization with a horizontal driving signal in accordance with an output voltage, wherein the turn ratio of the secondary winding to the primary winding is set to 80 or more.

The circuit which performs negative feedback of the primary side preferably PWM-controls the ON period of the switching element in accordance with an output voltage.

The diameter of a core around which the primary winding and the secondary winding are wound is preferably 10 mm or less.

The color CRT display is preferably a multiscan-compatible display in which the highest frequency of the horizontal driving signal is 115 kHz or lower.

The above and further objects, aspects and novel features of the invention will become more apparent from the following detailed description when read in connection with the accompanying drawings.

## BRIEF DESCRIPTION OF THE DRAWINGS

Fig. 1    shows an example of a power circuit in which a flyback transformer of an embodiment of the present invention is applied.

Fig. 2    shows waveform charts of each section of the power circuit.

Fig. 3    is a circuit diagram of another power circuit.

Fig. 4    shows the relationship between a turn ratio and loss.

Fig. 5    is a circuit diagram showing the construction of the flyback transformer.

Fig. 6    shows the relationship between the core diameter and an increase in temperature.

Fig. 7    is a circuit diagram of a conventional power circuit.

## DESCRIPTION OF THE PREFERRED EMBODIMENT

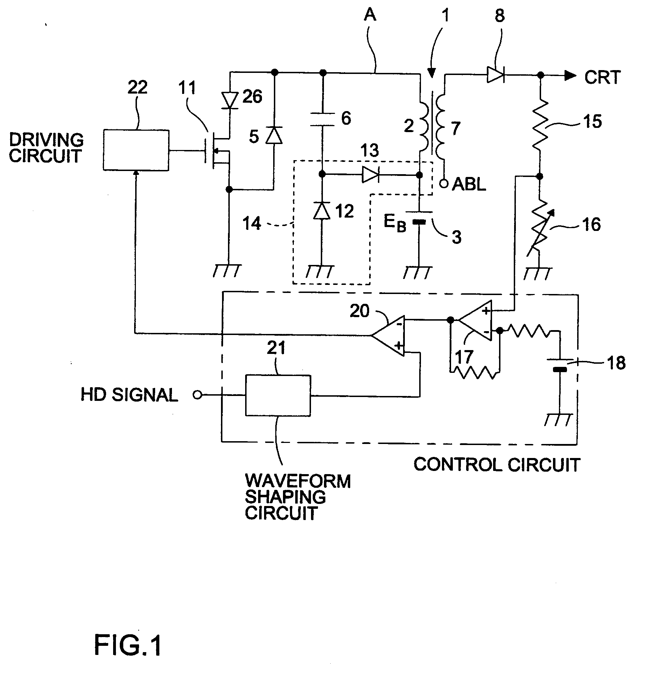

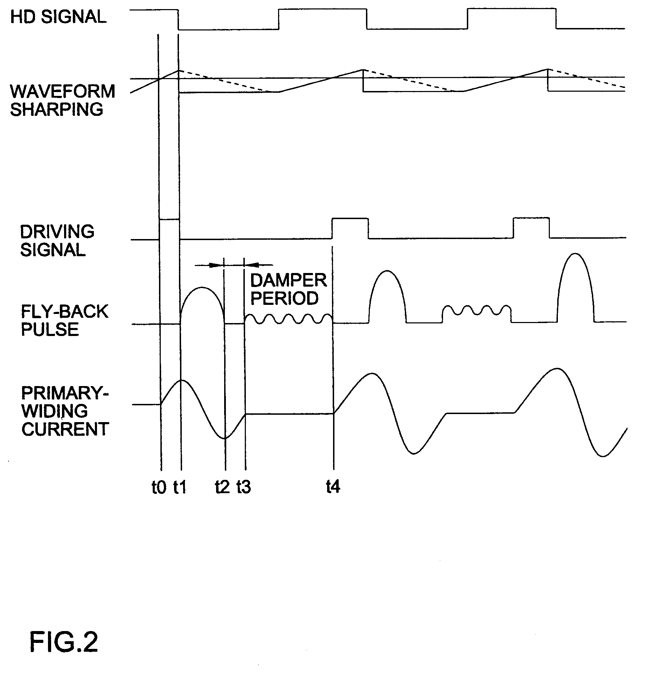

The construction of a power circuit in which a flyback transformer of the present invention is applied is described with reference to Figs. 1 and 2.

Referring to Fig. 1, reference numeral 1 denotes a flyback transformer. A driving power source 3 is connected to one end of a primary winding 2 of this flyback transformer 1, the drain of an MOS-FET (metal oxide semiconductor field-effect transistor) (hereinafter simply referred to as a "transistor") 11 as a switching element is connected to the other end of the primary winding 2, the source thereof being grounded. Between the drain of the transistor 11 and the primary winding 2, a diode 26 is connected in series to the transistor 11. One end of a resonance capacitor 6 is connected to one end of the primary winding 2, the cathode of a diode 12 is connected to the other end thereof, and the anode of the diode 12 is connected to the ground. The anode of a diode 13 is connected to the connection portion of the diode 12 and the resonance capacitor 6, and the cathode of the diode 13 is connected between the primary winding 2 and the driving power source 3. The low-voltage end of the secondary winding 7 of the flyback transformer 1 is connected to an ABL (automatic brightness control circuit), and voltage-division resistors 15 and 16 are connected to the high-voltage end. This divided voltage is applied to the non-inversion input terminal of an operational amplifier 17. The reference voltage of a reference power source 18 is applied to the inversion input terminal of the operational amplifier 17. This operational amplifier 17, together with the resistor connected thereto, constitutes an error amplifier circuit. The output signal of the operational amplifier 17 is connected to the inversion input terminal of a comparator 20, and a signal from a waveform shaping circuit 21 is applied to the non-inversion input terminal of the comparator 20. The waveform shaping circuit 21 integrates the horizontal driving signal (HD signal) in order to generate a ramp waveform. A driving circuit 22 performs switching of the transistor 11 in accordance with an output signal of the comparator 20.

Fig. 2 shows waveform charts of each section of the circuit shown in Fig. 1. The operation of this power circuit will now be described with reference to Figs. 1 and 2. First, when the transistor 11 is turned on at time t0, electric current flows from the driving power source 3 side, through the primary winding 2, through the transistor 11, to the ground. The electric current which flows through this primary winding 2 increases with time as shown at the bottom of Fig. 2, and accumulates as electromagnetic energy in the primary winding 2. When the transistor 11 is turned off at time t1, electric current flows mainly along the route passing from the primary winding 2 through the resonance capacitor 6 and the diode 13 and along the route passing through the diode 26 and the parasitic capacitance of the transistor 11, and the series resonance of the inductance of the primary winding 2 and the electrostatic capacitance of the resonance capacitor 6 is started, generating a flyback pulse. After all the electromagnetic energy of the primary winding 2 is transferred to the resonance capacitor 6, reverse electric current flows along the route passing through the diode 12, the resonance capacitor 6, and the primary winding 2 in this sequence and reaching the driving power source 3, and the electrostatic energy of the resonance capacitor 6 is reversely transformed into electromagnetic energy of the primary winding 2. At this time, the electric charge accumulated in the parasitic capacitance of the transistor 11 does not flow out to the primary winding 2 side because it is blocked. This diode 26 apparently decreases the parasitic capacitance of the transistor 11 and prevents unwanted pulses from being generated.

At time t2 when the flyback pulse is terminated, the electric potential of point A in Fig. 1 reaches 0, and at this time, the damper diode 5 is turned on, causing electric current to flow from the ground side through the damper diode 5 to the primary winding 2 side. When the voltage at point A is increased due to the flow of this reverse electric current and comes to have the same electric potential as a power-source voltage $E_B$ of the driving power source 3, the damper diode 5 is turned off. At this time, since both of the voltages at both ends of the resonance capacitor 6 are clamped to the power-source voltage $E_B$ of the driving power source 3 by a clamping circuit 14, electric current does not flow from the primary winding 2 side to the resonance capacitor 6 side, and unwanted pulse voltage is not generated. Next, when the transistor 11 is turned on at time t4, point A is grounded, causing the electric current flowing from the driving power source 3 side through the primary winding 2 to flow through the transistor 11 to the grounded side, reaching the initial state of t0. Thereafter, this operation is repeated.

The driving circuit 22 turns on/off the transistor 11 in accordance with a control signal from the control circuit. This causes the transistor to be turned on at a predetermined ON time in a cycle of a fixed horizontal driving signal (HD signal). Since this ON time is negative-feedback-controlled so that the input potential difference of the operational amplifier 17 becomes 0, the output voltage is stabilized.

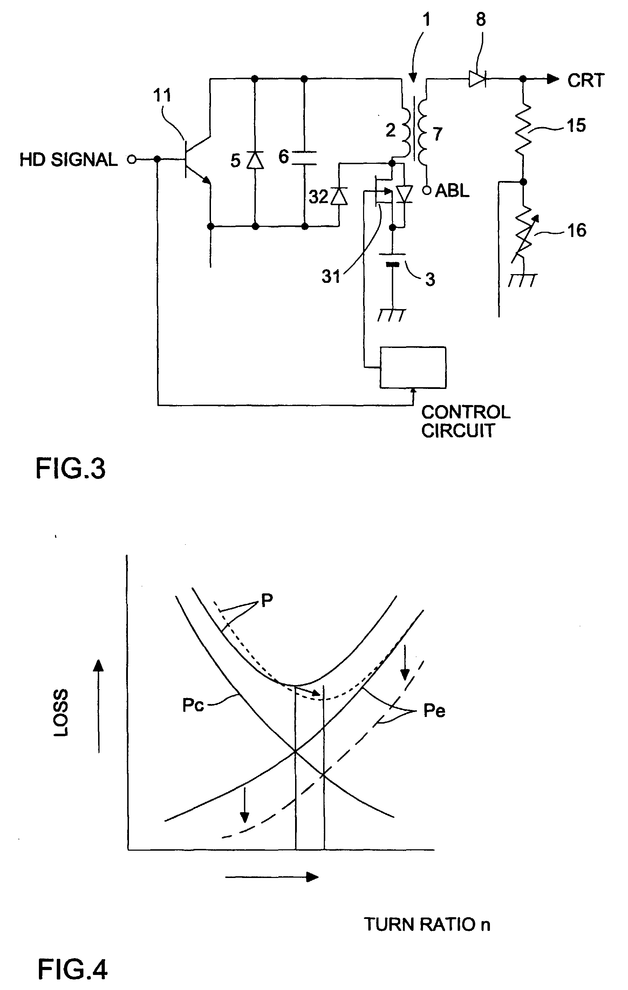

Fig. 3 shows another example of a power circuit in which a high output voltage is stabilized by PWM-controlling the driving power-source voltage. In this example, a switching transistor 31 is connected between one end of the primary winding 2 of the flyback transformer 1 and the driving power source 3. The control circuit inputs a voltage divided by the resistors 15 and 16 and performs on/off control of the switching transistor 31 in synchronization with a horizontal driving signal (HD signal). More specifically, by performing negative feedback control so that the less the detected value of the output voltage is decreased from the reference voltage, the longer the ON time of the switching transistor 31 takes, the output voltage is stabilized. Since the switching transistor 31 is controlled so that it is shut off before the flyback period starts, that is, in the ON period of the transistor 11, after the switching transistor 31 is turned off, collector current of the transistor 11 flows through a diode 32. The control circuit controls the ON time of the switching transistor 31 so that the voltage detected by the resistance division circuit of the resistors 15 and 16 becomes equal to the reference voltage. As a result, the output voltage is stabilized.

Next, a description is given of the construction of the flyback transformer used in the power circuit.

In the case where the flyback transformer is used in a power circuit for performing negative feedback control of a circuit which disconnects electric current flowing through a primary winding in synchronization with a horizontal driving signal in accordance with an output voltage, the present invention is designed to reduce the size of a flyback transformer without regulating the flyback transformer itself and also to reduce the size of the entire power circuit which generates a high voltage by utilizing the regulation characteristics of the power circuit itself.

When only the point for generating a high voltage as the function of the flyback transformer is taken note of, the following relation holds:

$$Vcp = k \cdot E_B \cdot ton/L$$
$$= k \cdot I_p$$

$$Hv = n \cdot Vcp$$

where Vcp is the peak voltage across both ends of the transistor which turns on/off the primary-winding current, $E_B$ is the driving power voltage, ton is the ON time of the transistor, L is the primary inductance, $I_P$ is the peak current of the primary winding, n is the turn ratio of the secondary winding to the primary winding, and Hv is the output voltage.

Rearranging the above equations,

$$I_P = Hv/n \cdot k$$

This shows that the greater the turn ratio n of the secondary winding to the primary winding, the smaller the peak current $I_p$ which flows through the primary winding becomes.

Core loss is, in general, (hysteresis loss + eddy-current loss), and is expressed as follows:

$$Core\ loss = (afBm + bfBm^2) + (k\pi^2 f^2 Bm^2)$$

where Bm is the saturation magnetic-flux density, and a, b, and k are each a constant. That is, the core loss becomes a function of the saturation magnetic-flux density Bm. The saturation magnetic-flux density Bm is expressed as follows:

$$Bm = LI_p/SN1$$

where S is the core sectional area, and N1 is the number of turns of the primary winding. The result is that the smaller $I_P$ is, the smaller the core loss.

Meanwhile, the current loss (called "copper loss") is expressed by a function of an effective current value of the primary winding. Therefore, the smaller $I_P$ is, the smaller the copper loss.

From the above relationship, $I_P$ can be decreased by increasing the turn ratio n of the secondary winding to the primary winding, making it possible to suppress the entire loss.

Another example of loss in a flyback transformer includes dielectric loss. This is determined by a geometrical structure, such as a winding structure of windings around the core, and the greater the turn ratio, the greater this dielectric loss. That is, there is a trade-off between the core loss and the dielectric loss. Here, the relationship between the turn ratio n and the loss of the entire flyback transformer is shown in Fig. 4. As shown in the Figure, the greater the turn ratio n, the less the core loss Pc is decreased and the more the dielectric loss Pe is increased. However, unlike the case of Pc, the dielectric loss Pe can be reduced to some extent without enlarging the entire flyback transformer.

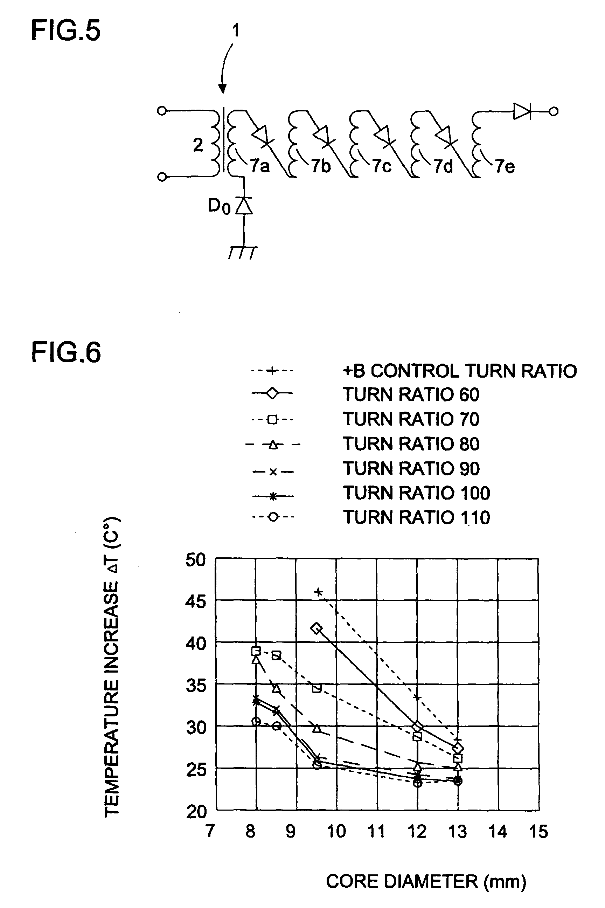

Fig. 5 shows a circuit diagram for the construction of a flyback transformer suitable for reducing dielectric loss. The secondary winding of the flyback transformer 1 is formed to be a multilayered winding of five layers indicated by 7a to 7e. This is such that secondary windings are each wound around the cylindrical winding core; these are overlaid in five layers and diodes are connected between the layers. Furthermore, a diode Do is inserted into the low voltage end of the secondary winding. With a multilayered winding construction in the manner described above, there is no potential difference at the proximity position between each pair of layers. Also, a diode is inserted into at each position at which the secondary winding is divided, and further, a diode is inserted into the low voltage end side, thereby the sharing of the voltage at each section of the secondary winding is performed. This causes the voltage gradient to be low overall, and the dielectric loss is decreased. For this reason, as indicated by the broken line shown in Fig. 4, the turn ratio n at which the loss P of the entire flyback transformer is minimized can be increased.

Next, the way in which the turn ratio n should be set was determined by experiment, and the results are shown below.

Here, the construction of the flyback transformer is as described below:

Winding method:    multilayered winding
Number of layers:    five
Core material:    low loss material
Core shape:    type 3557
Core diameter:    8.5 mm

〈Input conditions〉

$E_B$:    87 V
$I_b$:    336 mA
Frequency of the horizontal driving signal:    94 kHz

〈Output conditions〉

Output voltage:    25.5 kV
Output current:    800 μA

The measurement results of various measurement values when the turn ratio was varied under the above conditions are shown below.

Table 1

| TURN RATIO n | 70 | 80 | 90 | 100 | 110 |
|---|---|---|---|---|---|
| lb (A) | 0.512 | 0.510 | 0.502 | 0.500 | 0.495 |

Table 1 (continued)

| TURN RATIO n | 70 | 80 | 90 | 100 | 110 |
|---|---|---|---|---|---|
| Ip (AopAC) | 2.79 | 2.76 | 2.68 | 2.62 | 2.62 |
| Ib+Ip (A) | 3.302 | 3.270 | 3.182 | 3.120 | 3.115 |
| Efficiency OUT/IN (%) | 60.12 | 60.38 | 61.32 | 61.59 | 62.16 |
| Vcp(Vpp) | 520 | 480 | 420 | 375 | 358 |
| Tr($\mu$s) | 1.50 | 1.60 | 1.73 | 1.88 | 2.05 |
| Ton($\mu$s) | 4.00 | 3.80 | 3.70 | 3.70 | 3.65 |
| Bm(G) | 1511 | 1497 | 1456 | 1428 | 1426 |
| $\Delta$T(°C) | 37.2 | 34.9 | 32.0 | 32.3 | 30.5 |

In the above table, Ib is the DC component of the primary-winding current, Ip is the peak current (zero-peak AC components) of the primary winding, Vcp is the peak voltage across both ends of the transistor, Tr is the flyback pulse width, Ton is the transistor ON time, and $\Delta$T is an increase in temperature of the core in an atmosphere of 60°C. All of these are examples applied to the power circuit shown in Fig. 1. It can be seen from this result that the more the turn ratio n is increased from 70 to 110, the smaller the temperature increase $\Delta$T of the core becomes. Since the greater the turn ratio n is, the less Ip is decreased in the manner described above, $\Delta$T is decreased.

As one reference, in actual television receivers and computer monitors, it is preferable in practice that $\Delta$T be suppressed to 35°C or less in an atmosphere of 60°C.

In the above-described results, the turn ratio n is set to 80 or more. Also, it is estimated from the above data that if n = 120, $\Delta$T is further decreased. However, if the turn ratio is increased too much, the number of turns is increased, causing the winding width or the number of layers to increase. This causes the entire flyback transformer to increase in size, leading to increased costs. Therefore, the turn ratio n is determined by taking this point into consideration. Under the present conditions, it is believed that n up to about 120 is practical.

Next, results are shown in Fig. 6 in which the core temperature increase $\Delta$T was measured when the turn ratio n was varied and the core diameter was varied. "+B control" in the Figure is a conventional control method shown in Fig. 7, which is an example in which a conventional flyback transformer, whose turn ratio n is 60, is used, and is shown here as a comparative example. When the core diameter is 12 mm or more, $\Delta$T can be suppressed to 35°C or less in either case, but when the core diameter is 9.5 mm, if the turn ratio n is 60, $\Delta$T exceeds 35°C. Therefore, the conventional flyback transformer ordinarily cannot be used. Of course, the temperature increase is increased further under the +B control, and the conventional flyback transformer cannot be used. If the core diameter is 9.5 mm and the turn ratio n is 70 or more, $\Delta$T can be suppressed to 35°C or less. It can be seen that if the core diameter is 10 mm, even in the case of n = 70, there is an allowance for the core temperature increase. In the case where the core diameter is 8.5 mm, if the turn ratio n is 80 or more, $\Delta$T becomes 35°C or less in either case. Furthermore, even if the core diameter is 8 mm, if the turn ratio n is 90 or more, it can be seen that the flyback transformer can be used because $\Delta$T becomes 35°C or less.

In the example shown above, measurements were made under the conditions in which the frequency of the horizontal driving signal is 94 kHz. The higher the frequency of the horizontal driving signal, the more the core loss (in particular, the eddy-current loss) is increased, and the lower the frequency of the horizontal driving signal, the less the core loss is decreased. For this reason, under the conditions in which the frequency of the horizontal driving signal is 95 kHz or lower, even if the core diameter is decreased further, $\Delta$T can be suppressed.

Under the conditions in which the frequency of the horizontal driving signal is the highest frequency 115 kHz of a multiscancompatible color CRT display which is in common use at present, $\Delta$T is increased slightly more than the above-described measurement results. However, by setting the core diameter at 10 mm and setting the turn ratio at 80, $\Delta$T can be suppressed to 35°C or less. Therefore, if the turn ratio is set at 80 or more, even if a core having a diameter of 10 mm or less is used, the flyback transformer can be applied to a multiscan-compatible color CRT display in which the highest frequency of the horizontal driving signal is 115 kHz.

According to the present invention, even if the core diameter is decreased, an increase in temperature of the core can be sufficiently suppressed, and a flyback transformer which is small overall can be obtained.

According to the present invention, since the on/off control of the primary-winding current of the flyback transformer can be performed by using a single switching element, the number of parts can be reduced, making it possible to reduce the size of the entire power circuit as well as the flyback transformer of the present invention.

According to the present invention, by limiting the diameter of the core, it is possible to reduce the size of the entire flyback transformer within a fixed temperature increase range.

According to the present invention, by using a flyback transformer which is to be of reduced size, even if it is used in a multiscan-compatible color CRT display in which the frequency of the horizontal driving signal is generally higher, it is possible to construct a small power circuit.

Many different embodiments of the present invention may be constructed without departing from the spirit and scope of the present invention. It should be understood that the present invention is not limited to the specific embodiment described in this specification. To the contrary, the present invention is intended to cover various modifications and equivalent arrangements included within the spirit and scope of the invention as hereafter claimed. The scope of the following claims is to be accorded the broadest interpretation so as to encompass all such modifications, equivalent structures and functions.

**Claims**

1. A flyback transformer (1) for a color CRT display, which is connected to a power circuit comprising: a circuit which disconnects electric current flowing through a primary winding (2); and a circuit which performs negative feedback control of the circuit in synchronization with a horizontal driving signal in accordance with an output voltage, wherein the turn ratio of the secondary winding (7) to the primary winding (2) is set to 80 or more.

2. A flyback transformer (1) according to claim 1, wherein said circuit which performs negative feedback control PWM-controls the ON period of a switching element (11; 31) which disconnects electric current flowing through said primary winding (2) in accordance with an output voltage.

3. A flyback transformer (1) according to one of claims 1 and 2, wherein the diameter of a core around which said primary winding (2) and said secondary winding (7) are wound is 10 mm or less.

4. A flyback transformer (1) according to claim 3, wherein said color CRT display is a multiscan-compatible display in which the highest frequency of said horizontal driving signal is 115 kHz or lower.

FIG.1

HD SIGNAL

WAVEFORM
SHARPING

DRIVING
SIGNAL

DAMPER
PERIOD

FLY-BACK
PULSE

PRIMARY-
WIDING
CURRENT

t0 t1    t2 t3         t4

FIG.2

FIG.3

FIG.4

**FIG.5**

**FIG.6**

CORE DIAMETER (mm)

FIG.7